Europäisches Patentamt

European Patent Office

Office européen des brevets

(11) Publication number: **0 183 419**
**A2**

# EUROPEAN PATENT APPLICATION

(21) Application number: **85308172.7**

(22) Date of filing: **08.11.85**

(51) Int. Cl.⁴: **C10G 45/64 , B01J 29/06**

(30) Priority: **28.11.84 US 675496**

(43) Date of publication of application:
**04.06.86 Bulletin 86/23**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Yen, Jeffrey Hsing-Gan**
**R.D. No. 1 Box 218C Henderickson Mill Road**
**Swedesboro New Jersey 08085(US)**

(74) Representative: **West, Alan Harry**
**Mobil Court 3 Clements Inn**
**London WC2A 2EB(GB)**

(54) **Distillate dewaxing process.**

(57) Waxy distillate feedstocks are dewaxed by passing the waxy feedstock over a catalyst bed containing a mixture of medium pore zeolite and large pore zeolites having a Constraint Index less than 2 and having hydroisomerization activity in the presence of a hydrogenation component.

EP 0 183 419 A2

## DISTILLATE DEWAXING PROCESS

This invention relates to a process for dewaxing hydrocarbon oils.

Processes for dewaxing petroleum distillates have been known for a long time. Dewaxing is, as is well known, required when highly paraffinic oils are to be used in products which need to remain mobile at low temperatures, e.g., lubricating oils and jet fuels. The higher molecular weight straight chain normal and slightly branched paraffins which are present in oils of this kind are waxes which are the cause of high pour points in the oils and, if adequately low pour points are to be obtained, these waxes must be wholly or partly removed. In the past, various solvent removal techniques were used, e.g., propane dewaxing and MEK dewaxing, but the decrease in demand for petroleum waxes as such, together with the increased demand for gasoline and distillate fuels, has made it desirable to find processes which not only remove the waxy components, but which also convert these components into other materials of higher value.

Catalytic dewaxing processes achieve this end by selectively cracking the longer chain n-paraffins to produce lower molecular weight products which may be removed by distillation. Processes of this kind are described, for example, in The Oil and Gas Journal, January 6, 1975, pages 69-73 and U.S. Patent No. 3,668,113.

In order to obtain the desired selectivity, the catalyst has usually been a zeolite having a pore size which admits the straight chain n-paraffins, either alone or with only slightly branched chain paraffins, but which excludes more highly branched materials, cycloaliphatics and aromatics. Zeolites, such as ZSM-5, ZSM-11, ZSM-12, ZSM-23, ZSM-35 and ZSM-38, have been proposed for this purpose in dewaxing processes, and their use is described in U.S. Patent Nos. 3,894,938; 4,176,050; 4,181,598; 4,222,855; 4,229,282 and 4,247,388. A dewaxing process employing synthetic offretite is described in U.S. Patent No. 4,259,174. A hydrocracking process employing Zeolite Beta as the acidic component is described in U.S. Patent No. 3,923,641.

U.S. Patent No. 3,755,138 teaches mild solvent dewaxing to remove high quality wax from a lube stock, then catalytically dewaxing.

U.S. Patent No. 4,053,532 teaches hydrodewaxing a Fischer-Tropsch synthesis product with ZSM-5.

U.S. Patent No. 3,956,102 teaches hydrodewaxing of petroleum distillates with ZSM-5.

U.S. Patent No. 4,247,388 teaches dewaxing with ZSM-5 of specific activity.

U.S. Patent No. 4,222,855 teaches dewaxing to produce lubricating oils of low pour point and of high viscosity index with zeolites including ZSM-23 and ZSM-35.

U. S. Patent No. 4,372,839 teaches dewaxing waxy crude oils by contact with two different zeolites, e.g., ZSM-5 and ZSM-35.

U. S. Patent No. 4,419,220 teaches dewaxing with Zeolite Beta.

There are many catalysts in the prior art useful for dewaxing engine oil, and specifically for dewaxing distillate fractions. However, it has been found that the use of composite catalyst in distillate dewaxing processes result in higher yields under better reaction conditions than the prior art.

Accordingly, the present invention provides a process for catalytically dewaxing a wax containing distillate oil feedstocks to products comprising gasoline and distillates, by contacting the feedstock with a zeolite dewaxing catalyst with hydrogenation/ dehydrogenation component in the presence of hydrogen to produce liquid products with reduced wax content characterized in that the catalyst comprises 5 to 60 wt % medium pore zeolite, 5 to 60 wt % Zeolite Beta, 0 to 50 wt % binder and wherein the ratio of Zeolite Beta to medium pore zeolite determines the ratio of gasoline to distillate production.

The present process may be used to dewax a variety of waxy distillate stocks, such as gas oils, kerosenes, jet fuels, heating oils and other distillate fractions whose pour point and viscosity need to be maintained within certain specification limits. Distillate fractions contain significant amounts of waxy n-paraffins which result from the removal of polycyclic aromatics. The feedstock for the present process will normally be a $C_{11}+$ feedstock containing paraffins, olefins, naphthenes, aromatics and heterocyclic compounds, and with a substantial proportion of higher molecular weight n-paraffins and slightly branched paraffins which contribute to the waxy nature of the feedstock. During the processing, the n-paraffins become isomerized to iso-paraffins, and the slightly branched paraffins undergo isomerization to more highly branched aliphatics. At the same time, a measure of cracking does take place so that not only is the pour point reduced by reason of the isomerization of n-paraffins to the less waxy branched chain iso-paraffins but, in addition, the heavy ends undergo some cracking or hydrocracking to form liquid range materials which contribute to a low viscosity product. The degree of cracking which occurs is, however, limited so that the gas yield is reduced, thereby preserving the economic value of the feedstock.

In general, hydrodewaxing conditions include a temperature of 232 to 454°C (450°F to 850°F), a pressure between atmospheric to 20786 kPa (3000 psig), preferably 791 to 6996 kPa (100 to 1000 psig). The liquid hourly space velocity (LHSV), i.e., the volume of feedstock per volume of catalyst per hour, is generally between 0.1 and 10 and preferably is 0.2 to 4. The hydrogen-to-feedstock ratio is generally between 90 to 1,400 volumes of gas at standard conditions per volume of liquid at standard conditions, V/V, (500 to 8000 SCFB), preferably between 140 to 900 V/V (800 to 5000 SCFB).

The catalytic dewaxing process of this invention may be conducted by contacting the feed to be dewaxed with a fixed bed of the catalyst, a slurry bed or with a transport bed, as desired.

The catalyst used in this process comprises a medium pore crystalline silicate zeolite and a large pore crystalline silicate zeolite having a Constraint Index less than 2 and having hydroisomerization activity, e.g., Zeolite Beta, preferably in combination, with a hydrogenation component.

A portion of the novel class of zeolites useful herein are termed medium or intermediate pore zeolites and have an effective pore size of generally less than about 7 angstroms, such as to freely sorb normal hexane. By "effective pore size" it is meant that the pores of the medium pore zeolite behave in the same fashion as perfectly cylindrical pores, generally less than 7 angstroms in size. Thus, a medium pore zeolite may have pores in excess of 7 angstroms in size as long as the shape of the pores renders an effective pore size no greater than 7 angstroms in size. In addition, the structure must provide constrained access to larger molecules. It is sometimes possible to judge from a known crystal structure whether such constrained access exists. For example, if the only pore windows in a crystal are formed by 8-membered rings of silicon and aluminum atoms, then access by molecules of larger cross-section than normal hexane is excluded and the zeolite is not of the desired type. Windows of 10-membered rings are preferred, although, in some instances, excessive puckering of the rings or pore blockage may render these zeolites ineffective.

Although 12-membered rings in theory would not offer sufficient constraint to produce advantageous conversions, it is noted that the puckered 12-ring structure of TMA offretite does show some constrained access. Other 12-ring structures may exist which may be operative for other reasons, and therefore, it is not the present intention to entirely judge the usefulness of a particular zeolite solely from theoretical structural considerations.

Another class of zeolites important to the present invention, i.e., large pore zeolites, are well known to the art and have a pore size sufficiently large to admit the vast majority of components normally found in a feed chargestock. These zeolites are generally stated to have a pore size in excess of about 7 angstroms and are represented by, e.g., Zeolite Y, Mordenite, ZSM-4, ZSM-20 and Zeolite Beta.

A convenient measure of the extent to which a zeolite provides control to molecules of varying sizes to its internal structure is the Constraint Index of the zeolite. Zeolites which provide a highly restricted access to and egress from its internal structure have a high value for the Constraint Index, and zeolites of this kind usually have pores of small size. On the other hand, zeolites which provide relatively free access to the internal zeolite structure have a low value for the Constraint Index. Constraint Index is described in U. S. Patent No. 4,016,218.

Constraint index (CI) values for typical medium pore zeolites, including those useful herein, are:

| Crystalline Silicate | CI |
|---|---|
| ZSM-5 | 6-8.3 |
| ZSM-11 | 6-8.7 |
| ZSM-12 | 2 |
| ZSM-23 | 9.1 |
| ZSM-38 | 2 |
| ZSM-35 | 4.5 |
| ZSM-48 | 3.4 |
| TMA Offretite | 3.7 |

Suitable large pore zeolites include Zeolite Beta, ZSM-4, ZSM-20, Mordenite, TEA Mordenite, Dealuminized Y, and Rare Earth Y (REY), but not crystalline alumina, chlorinated alumina and silica-alumina. Constraint Index values for these materials are:

| | CI |
|---|---|
| ZSM-4 | 0.5 |
| ZSM-20 | 0.5 |
| Mordenite | 0.5 |
| TEA Mordenite | 0.4 |
| Dealuminized Y | 0.5 |
| REY | 0.4 |
| Zeolite Beta | 0.6-1+ |

The large pore component may also be a low sodium Ultrastable Y molecular sieve (USY). USY is described in U. S. Patents Nos. 3,293,192 and 3,449,070.

The above-described Constraint Index is an important and even critical definition of these zeolites which are useful in the instant invention. The very nature of this parameter and the recited technique by which it is determined, however, admit of the possibility that a given zeolite can be tested under somewhat different conditions and thereby exhibit different Constraint Indices. Constraint Index seems to vary somewhat with severity of operation (conversion) and the presence or absence of binders. Likewise, other variables, such as crystal size of the zeolite, the presence of occluded contaminants, etc., may effect the Constraint Index. Therefore, it will be appreciated that it may be possible to so select test conditions as to establish more than one value for the Constraint Index of a particular zeolite. This explains the range of Constraint Indices for zeolites, such as ZSM-5, ZSM-11, ZSM-34 and Zeolite Beta.

ZSM-4 is taught in U. S. Patent No. 3,923,639.

ZSM-5 is taught in U. S. Patent Nos. 3,702,886 and Re. No. 29,949.

ZSM-11 is taught in U. S. Patent No. 3,709,979.

ZSM-12 is taught in U. S. Patent No. 3,832,449.

ZSM-20 is taught in U. S. Patent No. 3,972,983.

ZSM-23 is taught in U. S. Patent No. 4,076,842.

ZSM-34 is taught in U. S. Patent No. 4,086,186.

ZSM-35 is taught in U. S. Patent No. 4,016,245.

ZSM-38 is taught in U. S. Patent No. 4,046,859.

ZSM-48 is taught in U. S. Patent No. 4,397,827.

Zeolite Beta is described in U. S. Patents Nos. 3,308,069 and Re. 28,341.

An exceptionally suitable large pore material is Zeolite Beta. It is to be noted that Zeolite Beta does not have the same structure as the other listed large pore zeolites. However, all of these zeolites provide hydroisomerization activity. The use of the large pore catalysts and Zeolite Beta in a hydroisomerization activity is disclosed in U. S. Patents Nos. 4,419,220 and 4,428,819. The large pore hydroisomerization catalysts comprise an acidic component and a hydrogenation-dehydrogenation component (referred to, for convenience, as a hydrogenation component) which is generally a metal or metals of Groups IB, IIB, VA, VIA or VIIIA of the Periodic Table (IUPAC and U. S. National Bureau of Standards approved Table, as shown. for example, in the Chart of the Fisher Scientific Company, Catalog No. 5-702-10). The preferred hydrogenation components are the noble metals of Group VIIIA, especially platinum, but other noble metals, such as palladium, gold, silver, rhenium or rhodium, may also be used. Combinations of noble metals, such as platinum-rhenium, platinum-palladium, platinum-iridium or platinum-iridium-rhenium, together with combinations with non-noble metals, particularly of Groups VIA and VIIIA are of interest, particularly with metals such as cobalt, nickel, vanadium, tungsten, titanium and molybdenum, for example, platinum-tungsten, platinum-nickel or platinum-nickel- tungsten. Base metal hydrogenation components may also be used, especially nickel, cobalt, molybdenum, tungsten, copper or zinc. Combinations of base metals, such as cobalt-nickel, cobalt molybdenum, nickel-tungsten, cobalt-nickel-tungsten or cobalt-nickel-titanium, may also be used.

The metal may be incorporated into the catalyst by any suitable method, such as impregnation or exchange, onto the zeolite. The metal may be incorporated in the form of a cationic, anionic or neutral complex, such as $Pt(NH_3)_4^{2+}$, and cationic complexes of this type will be found convenient for exchanging metals onto the zeolite. Anionic complexes are also useful for impregnating metals into the zeolites.

The crystalline zeolite used in the catalyst of the present invention generally comprise a three-dimensional lattice of $SiO_4$ tetrahedra, cross-linked by the sharing of oxygen atoms and which may optionally contain other atoms in the lattice, especially aluminum in the form of $AlO_4$ tetrahedra; the zeolite will also include a sufficient cationic complement to balance the negative charge on the lattice. Acidic functionality may, of course, be varied by artifices including base exchange, steaming or control of silica:alumina ratio.

The isomerization reaction is one which requires a relatively small degree of acidic functionality in the catalyst. Because of this, the zeolite may have a very high silica:alumina ratio since this ratio is inversely related to the acid site density of the catalyst. Thus, structural silica:alumina ratios of 50:1 or higher are preferred and, in fact, the ratio may be much higher, e.g., 100:1, 200:1, 500:1, 1000:1, or even higher. Since zeolites are known to retain their acidic functionality even at very high silica:alumina ratios of the order of 25,000:1, ratios of this magnitude or even higher are contemplated.

The original cations associated with each of the crystalline silicate zeolites utilized herein may be replaced by a wide variety of other cations according to techniques well known in the art. Typical replacing cations include hydrogen, ammonium, alkyl ammonium and metal cations, including mixtures of the same. Of the replacing metallic cations, particular reference is given to cations of metals such as rare earth metals, manganese, as well as metals of Group II A and B of the Periodic Table, e.g., zinc, and Group VIII of the Periodic Table, e.g., nickel, platinum and palladium.

Typical ion exchange techniques are to contact the particular zeolite with a salt of the desired replacing cation. Although a wide variety of salts can be employed, particular preference is given to chlorides, nitrates and sulfates.

Representative ion exchange techniques are disclosed in a wide variety of patents, including U. S. Patent Nos. 3,140,249; 3,140,251; and 3,140,253.

Following contact with a solution of the desired replacing cation, the zeolite is then preferably washed with water and dried at a temperature ranging from 150°F (65°C) to 600°F (315°C) and thereafter calcined in air, or other inert gas at temperatures ranging from 500°F (260°C) to 1500°F (815°C) for 1 to 48 hours or more. It has been further found that zeolites of improved selectivity and other beneficial properties may be obtained by subjecting the zeolite to treatment with steam at elevated temperatures ranging from 500°F (260°C) to 1200°F (649°C), and preferably 750°F (399°C) to 1000°F (538°C). The treatment may be accomplished in an atmosphere of 100% steam or an atmosphere consisting of steam and a gas which is substantially inert to the zeolites.

A similar treatment can be accomplished at lower temperatures and elevated pressure, e.g., 350°-700°F (177°-371°C) at 10 to about 200 atmospheres.

The zeolite is desirably employed in intimate combination with one or more hydrogenation components, such as tungsten, vanadium, zinc, molybdenum, rhenium, nickel, cobalt, chromium, manganese, or a noble metal such as platinum or palladium, in an amount between about 0.1 and about 25% by weight, normally 0.1 to 5% by weight especially for noble metals, and preferably 0.3 to 1% by weight. The component can be exchanged into the composition, impregnated thereon or physically intimately admixed therewith. The component can be impregnated into or onto the zeolite, such as, for example, in the case of platinum, by treating the zeolite with a platinum metal-containing ion. Thus, suitable platinum compounds include chloroplatinic acid, platinous chloride and various compounds containing the platinum amine complex.

The compounds of the useful platinum or other metals can be divided into compounds in which the metal is present in the cation of the compound and compounds in which it is present in the anion of the compound. Both types of compounds which contain the metal in the ionic state can be used. A solution in which platinum metals are in the form of a cation or cationic complex, e.g., $Pt(NH_3)_4Cl_2$, is particularly useful.

Prior to use, the zeolites should be dehydrated at least partially. This can be done by heating to 390°F (200°C) to 1112°F (600°C) in an inert atmosphere, such as air, nitrogen, etc., and at atmospheric or subatmospheric pressures for between 1 and 48 hours. Dehydration can also be performed at lower temperatures merely by using a vacuum, but a longer time is required to obtain sufficient amount of dehydration.

A preferred method for preparing the zeolite is to blend the zeolite with an inorganic oxide, such as alumina hydrates, form the composite into extrudates, dry the extrudate and calcine in an atmosphere such as nitrogen or air. The extrudate may then be exchanged with cations, such as ammonium, and recalcined, prior to adding a hydrogenation component, such as metals of Groups VI, VII, and VIII of the Periodic Table, e.g., platinum, molybdenum, nickel and cobalt. The addition of the hydrogenation component may be accomplished by impregnation, ion exchange or other conventional methods. Drying and calcining subsequent to the addition of the hydrogenation component is then used to complete the preparation.

While it is understood that the process of the present invention may be accomplished by utilizing a catalyst incorporating any of the previously-mentioned large pore zeolites, the preparation and process of using the novel catalyst of the present invention will be exemplified using Zeolite Beta as the large pore zeolite.

The catalysts of this invention are typically prepared by mulling together from 5 to 60% by weight, preferably 20 to 40% by weight, medium pore zeolite ($SiO_2/Al_2O_3$ mole ratio of 70), from 5 to 60% by weight, preferably 20 to 40% by weight, large pore zeolite, e.g., $NH_4$-Zeolite Beta ($SiO_2/Al_2O_3$ mole ratio of 30), and from 0 to 50% by weight, preferably 0 to 40% by weight, binder, e.g., alpha alumina monohydrate. During the mulling process, a sufficient amount of water containing $H_2PtCl_6$ or $Pt(NH_3)_4(NO_3)_2$ is added slowly to the dry mulling mixture. The mulling process is continued for about 20 minutes or until the mixture is uniform. The mixture is then extruded and dried at 230°F (110°C) for approximately 3 hours. The extrudates are crushed and sized to 0.25 to 0.6 mm (30/60 mesh material) and calcined in air at 1000°F (538°C) for 3 hours. The catalyst thus produced contains from about 0.1 to 2% by weight, preferably 0.3 to 1% by weight of finely dispersed platinum. It is to be understood that metal cations other than platinum may be incorporated into the catalyst.

The chargestock used in the following examples was Minas gas oil having the following properties:

| | | |
|---|---|---|
| Specific Gravity | 0.849 | |
| Gravity | | |
| °API | 35.1 | |
| Pour Point, °F (°C) | 95 (35) | |
| Cloud Point, °F (°C)    above | 120 (50) | |
| KV at 40°C, cs | 8.671 | |
| KV at 100°C, cs | 2.534 | |
| Sulfur, wt % | 0.068 | |
| Nitrogen, ppm | 180 | |
| Basic Nitrogen, ppm | 74 | |
| Hydrogen, wt % | 13.96 | |
| Aniline Point | 202 | |
| Bromine No. | 1.5 | |
| Carbon Residue by MCRT, % | 0.02 | |
| ASTM Color    lighter than | 5.0 | |
| $C_{10}^{+}$ Non-Aromatic Type | | |
| Paraffins, % | 45.3 | |
| Mono Naphthenes, % | 16.0 | |
| Poly Naphthenes, % | 17.0 | |
| Aromatics, % | 21.8 | |
| Simulated Distillation | °F | °C |
| 0.5% Off | 259.2 | 126.1 |
| 5% | 520.8 | 271.1 |
| 10% | 546.2 | 258.6 |
| 20% | 597.9 | 314.4 |
| 30% | 635.8 | 335.4 |
| 40% | 666.9 | 352.8 |
| 50% | 694.2 | 367.8 |
| 60% | 722.4 | 383.5 |
| 70% | 752.4 | 400.2 |
| 80% | 789.8 | 421.1 |
| 90% | 852.4 | 455.8 |
| 95% | 936.6 | 502.5 |
| 99.5% | 1106 | 596.7 |

Example 1 (Prior Art)

Example 1 illustrates the use of steamed Ni-ZSM-5 catalyst. The catalyst was loaded into a 1.2 mm (15/32") ID fixed-bed reactor, reduced under $H_2$, and presulfided with 2% $H_2S/H_2$ at 700°F (371°C). Chargestock with hydrogen was passed over the catalyst. Conditions are recited in Table 1. The product stream leaving the reactor was passed through a heated trap, a cold-water trap, and a gas-sampling bomb. The gas samples were analyzed by mass spectrometry for $C_1$-$C_4$ components. Liquid products were topped under less than 1 Torr pressure and maximum pot temperature of 285°F (140°C), to isolate the 165°C+ (330°F+) product. Some of the topped samples were processed through a simulated distillator. The light liquid products, i.e., the condensate from the cold trap and the overhead from the topped samples, were analyzed by gas chromatography. Overall material balances were made based on total liquid feed charge plus hydrogen. The results are recited in Table 1.

TABLE 1

## TABLE 1

Reactor

| | |
|---|---|
| Temperature, °F (°C) | 721 (383) |
| Pressure, psig | 400 |
| kPA | 2859 |
| LHSV | 1 |
| Pour Point, °F (°C) | 20 (-6) |

Product Selectivity, wt %

| | |
|---|---|
| $C_1 + C_2$ | 0.4 |
| $C_3$ | 3.0 |
| $C_4$ | 6.6 |
| $C_5$ – 165°C (330°F) | 24.9 |
| 165°C+ (330°F+) | 65.1 |

Example 2 (Prior Art)

Example 2 illustrates the effect of a 0.5% Pt-Zeolite Beta catalyst on the chargestock. The platinum catalyst was reduced _in situ_ at 900°F (482°C) and 2859 kPa (400 psig) of hydrogen for one hour before introducing the feed into the reactor. The procedure of Example 1 was followed under conditions specified in Table 2, which also recites the results.

TABLE 2

## TABLE 2

Reactor

|  |  |
|---|---|
| Temperature, °F (°C) | 795 (424) |
| Pressure, psig | 400 |
| kPa | 2859 |
| LHSV | 1 |
| Pour Point, °F (°C) | 20 (-6) |

Product Selectivity, wt %

|  |  |
|---|---|
| $C_1 + C_2$ | 0.4 |
| $C_3$ | 0.6 |
| $C_4$ | 1.4 |
| $C_5$ - 165°C (330°F) | 7.3 |
| 165°C+ (330°F+) | 90.3 |

Example 3 (Invention)

Example 3 illustrates the effect of 0.45% Pt-ZSM-5/
Zeolite Beta on the chargestock. The composition of the
catalyst is as follows:

| Component | Wt. % |
|---|---|
| $NH_4$ ZSM-5 | 32.5 |
| $NH_4$ Zeolite Beta | 32.5 |
| Alpha Alumina Monohydrate (binder) | 35 |
| Platinum | 0.44 |

The procedure of Example 2 was followed under conditions specified in Table 3, which also recites the results.

TABLE 3

## TABLE 3

Reactor

| | |
|---|---|
| Temperature, °F (°C) | 740 (393) |
| Pressure, psig | 400 |
| kPa | 2859 |
| LHSV | 1 |
| Pour Point, °F (°C) | 20 (-6) |

Product Selectivity, wt %

| | |
|---|---|
| $C_1 + C_2$ | 0.2 |
| $C_3$ | 3.2 |
| $C_4$ | 3.3 |
| $C_5$ - 165°C (330°F) | 19.6 |
| 165°C (330°F+) | 73.7 |

The catalyst of the present invention is intermediate in distillate selectivity and activity between Ni-ZSM-5, and Pt-Zeolite Beta. The Pt-ZSM-5/Zeolite Beta catalyst produced a 165°C (330°F+) yield of 73.7 wt % at a -6°C (20°F) pour point, compared to a 65.1 wt % yield with Ni-ZSM-5 catalyst and a 90.3 wt % yield with the Zeolite Beta catalyst. The activity of the Pt-ZSM-5/Zeolite Beta catalyst was only 11°C (20°F) less than for the Ni-ZSM-5 catalyst, but 31°C (55°F) more than for the Zeolite Beta catalyst.

The improved distillate selectivity and reduced light gas make of the Pt-ZSM-5/Zeolite Beta catalyst relative to the Ni-ZSM-5 catalyst and the more favorable reactor temperature conditions of the Pt-ZSM-5/Zeolite Beta catalyst relative to the Zeolite Beta catalyst thus makes the catalyst of the present invention a favorable replacement for each of the comparative catalysts in a distillate dewaxing process.

The gasoline-to-distillate yield ratio in the product can be varied with the content of the medium pore zeolite and/or large pore zeolite in the catalyst. Medium pore zeolite dewaxing produces a greater yield of gasoline than large pore zeolite dewaxing (24.9 wt % vs. 8.0 wt %). However, the reverse is true with respect to distillate yield (65.1 wt % vs. 90.3 wt %). A feature of the present invention is that the ratio of gasoline to distillate is controlled by controlling the composition of the catalyst. If greater gasoline yield is desired, then the ratio of medium pore zeolite to large pore zeolite should be increased. A larger distillate yield requires an increased ratio of large pore to medium pore zeolite in the catalyst.

**Claims**

1. A process for catalytically dewaxing a wax containing distillate oil feedstock to products comprising gasoline and distillates, by contacting the feedstock with a zeolite dewaxing catalyst with hydrogenation/dehydrogenation component in the presence of hydrogen to produce liquid products with reduced wax content characterized in that the catalyst comprises 5 to 60 wt % medium pore zeolite, 5 to 60 wt % Zeolite Beta, 0 to 50 wt % binder and wherein the ratio of Zeolite Beta to medium pore zeolite determines the ratio of gasoline to distillate production.

2. The process of claim 1 wherein the catalyst comprises 20 to 40 wt. % medium pore zeolite, 20 to 40 wt. % Zeolite Beta, 0 to 40 wt. % binder, and 0.3 to 1 wt. % finely dispersed platinum.

3. The process of Claim 1 or 2 wherein the binder is alpha-alumina, silica, silica-alumina, naturally-occurring clays or mixtures thereof.

4. The process of any preceding claim wherein the silica-to-alumina ratio of medium pore zeolite is at least 12:1.

5. The process of any preceding claim wherein the silica-alumina ratio of Zeolite Beta is at least 10:1.

6. The process of any preceding claim wherein the medium pore zeolite is ZSM-5, ZSM-11, ZSM-12, ZSM-23, ZSM-35, ZSM-38, ZSM-48 or TMA Offretite.